# EUROPÄISCHE PATENTSCHRIFT

(11) **EP 0 680 289 B1**
(45) Veröffentlichungstag und Bekanntmachung des Hinweises auf die Patenterteilung: **26.08.1998**
(21) Anmeldenummer: 94931566.7
(22) Anmeldetag: 05.11.1994
(51) Int. Cl.: A61C 17/06

(54) **FLÜSSIGKEITS-ABSCHEIDEEINHEIT**
LIQUID SEPARATING UNIT
SEPARATEUR DE LIQUIDE

(30) Priorität: 25.11.1993 DE 4340193
(43) Veröffentlichungstag der Anmeldung: 08.11.1995
(73) Patentinhaber: Dürr-Dental GmbH & Co. KG, D-74321 Bietigheim-Bissingen (DE)
(72) Erfinder: ELLINGHAUS, Wolfgang, D-70839 Gerlingen (DE)
(74) Vertreter: Ostertag, Reinhard
(86) Internationale Anmeldenummer: EP9403635
(87) Internationale Veröffentlichungsnummer: WO9514440

(56) Entgegenhaltungen:
- EP-A- 0 237 708
- EP-A- 0 524 455
- DE-A- 3 916 742

## Beschreibung

Die Erfindung betrifft eine Flüssigkeits-Abscheideeinheit gemäß dem Oberbegriff des Anspruches 1.

Eine derartige Abscheideeinheit ist in der EP-A-0 524 455 beschrieben. Sie umfaßt einen Flüssigkeits-Abscheidezyklon mit einem mit einer umlaufenden Antriebswelle verbundenen Ausleitteil. Dieses hat im wesentlichen zylindrische Geometrie, wobei axiale Endabschnitte des Ausleitteiles mit einer Abschrägung versehen sind. Diese Abscheideeinheit stellt bezüglich des Rückförderns im Ausleitteil noch abgeschiedener flüssiger Anteile noch nicht vollständig zufrieden.

In der EP-B-0 237 708 ist ferner eine Abscheideeinheit beschrieben, die an eine Saugmaschine koaxial angesetzt ist. Sie umfaßt einen Flüssigkeits-Abscheidezyklon, durch welchen eine Motorwelle der Saugmaschine hindurchgezogen ist. Das Ende der Motorwelle trägt ein Pumpenlaufrad, welches im Zyklon abgeschiedene Flüssigkeit aus dem unter Unterdruck stehenden Zyklon in das öffentliche Kanalnetz austrägt. Um eine direkte Strömungsverbindung zwischen dem Einlaß des Zyklons und dessen mit der Saugmaschine verbundenen Auslasses zu unterbinden, ist ein im wesentlichen zylindrisches Ausleitteil im Inneren des Zyklons vorgesehen.

Wird eine derartige Anscheideeinheit mit sehr großen Mengen Schwallwassers beaufschlagt, so kann es immer noch dazu kommen, daß Flüssigkeitströpfchen, die sich in das Innere des Ausleitteiles verirren, von dort in das Innere der Saugmaschine gelangen, ähnlich wie bei der Abscheideeinheit nach der EP-A-0 524 455.

Durch die vorliegende Erfindung soll daher eine Abscheideeinheit gemäß dem Oberbegriff des Anspruches 1 so weitergebildet werden, daß etwa in das Innere des Ausleitteiles gelangende Flüssigkeit besser zum Pumpenlaufrad zurückgefördert wird.

Diese Aufgabe ist erfindungsgemäß gelöst durch eine Abscheideeinheit mit den im Anspruch 1 angegebenen Merkmalen.

Bei dem erfindungsgemäß ausgebildeten Flüssigkeitsabscheidezyklon erhält man durch die Einschnürung des umlaufenden Ausleitteiles ein zwangsweises Rückfördern dort noch abgeschiedener Flüssigkeitsanteile zum Pumpenlaufrad hin, wo das Ausleitteil seinen größten Durchmesser hat. Dabei ist durch die Lage der Einschnürung gleichzeitig ein günstiges Strömungsverhalten für die Luft und ein sicheres Zurückfördern abgeschiedener flüssiger Bestandteile gewährleistet.

Vorteilhafte Weiterbildungen der Erfindung sind in Unteransprüchen angegeben.

Mit der Weiterbildung der Erfindung gemäß Anspruch 2 wird erreicht, daß die vom Zyklon abgegebene Luft im Ausleitteil einer zusätzlichen Zentrifugalwirkung unterworfen wird, was im Hinblick auf die Abscheidung von Restanteilen an Flüssigkeit von Vorteil ist.

Bei einer Abscheideeinheit gemäß Anspruch 3 ist gewährleistet, daß im Ausleitteil zum Pumpenlaufrad zurückgeförderte flüssige Anteile des zerlegten Gemisches direkt am Ende des Ausleitteiles vom Pumpenlaufrad übernommen werden und effektiv endgültig in den Flüssigkeitsauslaßstutzen gefördert werden.

Mit der Weiterbildung der Erfindung gemäß Anspruch 4 wird erreicht, daß die den Flüssigkeitsabscheidezyklon verlassende Luftmenge zwangsweise einen zusätzlichen Drall erhält, was im Hinblick auf eine effektive Flüssigkeitsabscheidung schon vor Eintreten der Luft in das Ausleitteil von Vorteil ist. Diese Verbesserung der Flüssigkeitsabscheidung wird ohne nennenswerte zusätzliche Kosten erhalten, da das Pumpenlaufrad sowieso mit Pumpflügeln besetzt werden muß.

Mit der Weiterbildung der Erfindung gemäß Anspruch 5 wird erreicht, daß die aus dem Flüssigkeitsabscheidezyklon abgegebene Luft in im wesentlichen glatter Strömung in das Ausleitteil umgelenkt wird.

Bei einer Abscheideeinheit gemäß Anspruch 6 hat man eine sehr wirkungsvolle dynamische Abdichtung zwischen dem Flüssigkeitsauslaßkanal und dem Flüssigkeitsabscheidezyklon.

Bei starker Schwallwasserbelastung kann es in dem zwischen der Zyklonwand und dem Ausleitteil liegenden Ringraum zu Spritzerbildung kommen. Bei einer Abscheideeinheit gemäß Anspruch 7 ist gewährleistet, daß diese Spritzer im Inneren des Zyklons zurückgehalten werden.

Dabei wird mit der Weiterbildung der Erfindung gemäß Anspruch 8 erreicht, daß der Prallflansch insgesamt zweigeteilt ist. Man hat also eine Dichtfläche zwischen zwei dünnen gegeneinander bewegten Bauelementen, die leichter auf kleines Spiel gepaßt werden können als die mechanisch stabile und dicke Zyklonwand.

Gestaltet man den feststehenden Teil des Prallflansches gemäß Anspruch 9, so kann etwa über den Prallflansch gelangte Flüssigkeit unter Schwerkrafteinwirkung längs desselben nach unten strömen und am unteren Ende des feststehenden Teiles des Prallflansches abtropfen.

Auch die Weiterbildung der Erfindung gemäß Anspruch 10 dient einer zuverlässigen Abdichtung des oberen Endes des umlaufenden Ausleitteiles gegen das Zyklongehäuse.

Die dynamische Abdichtung des oberen Endes des Ausleitteiles gemäß Anspruch 11 und gemäß Anspruch 12 sorgt für eine nochmals verbesserte Abdichtung des oberen Endes des Ausleitteiles.

Mit der Weiterbildung der Erfindung gemäß Anspruch 13 wird erreicht, daß die vom Flüssigkeitsabscheidezyklon abgegebene Luft im wesentlichen glatt und wirbelfrei von einer sich kegelförmig erweiternden Ansaugöffnung der Saugmaschine übernommen wird.

Dabei erhält man gemäß Anspruch 14 durch die auf der Außenseite des Auslaßstutzens vorgesehenen axialen Rippen auch hier eine dynamische Abdichtung.

Die Weiterbildung der Erfindung gemäß Anspruch 15 ist im Hinblick auf das Vermeiden eines Festklemmens von etwa in der abgeschiedenen Flüssigkeit enthaltenen Festkörperpartikeln zwischen der Unterseite des Pumpenlaufrades und der gegenüberliegenden Begrenzungsfläche der Pumpenkammer von Vorteil.

Baut man gemäß Anspruch 16 eine Flüssigkeits-Abscheideeinheit direkt an eine Saugmaschine an, so erhält man eine kompakte und mechanisch einfachen Aufbau aufweisende Abscheideeinheit mit nur einem einzigen Antriebsmotor.

Nachstehend wird die Erfindung anhand eines Ausführungsbeispieles unter Bezugnahme auf die Zeichnung näher erläutert. In dieser zeigen:
- Figur 1:: einen axialen Schnitt durch einen Flüssigkeitsabscheidezyklon zusammen mit dem Ende einer Saugmaschine, an welche dieser Zyklon angeflanscht ist;

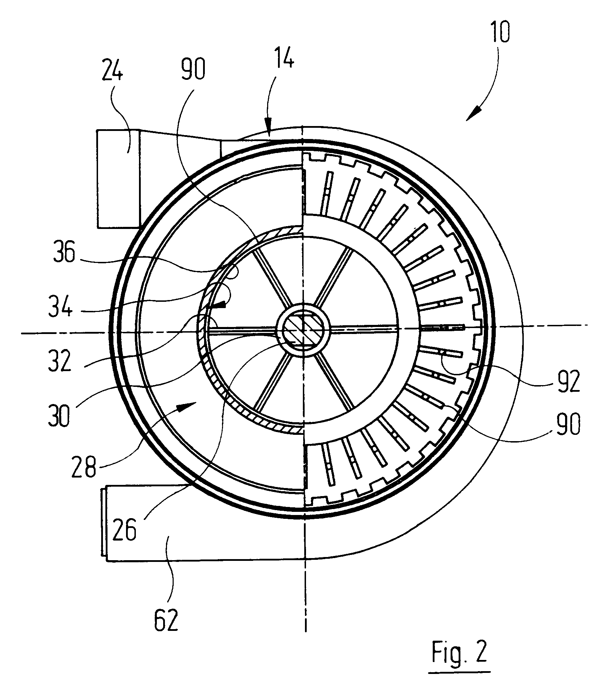

- Figur 2:: einen abgewandelten Schnitt durch einen oberen Endabschnitt des Flüssigkeitsabscheidezyklons längs der Schnittlinie II-II von Figur 1; und
- Figur 3:: einen schnitt durch den unteren Endabschnitt des Flüssigkeitsabscheidezyklons längs der Schnittlinie III-III von Figur 1.

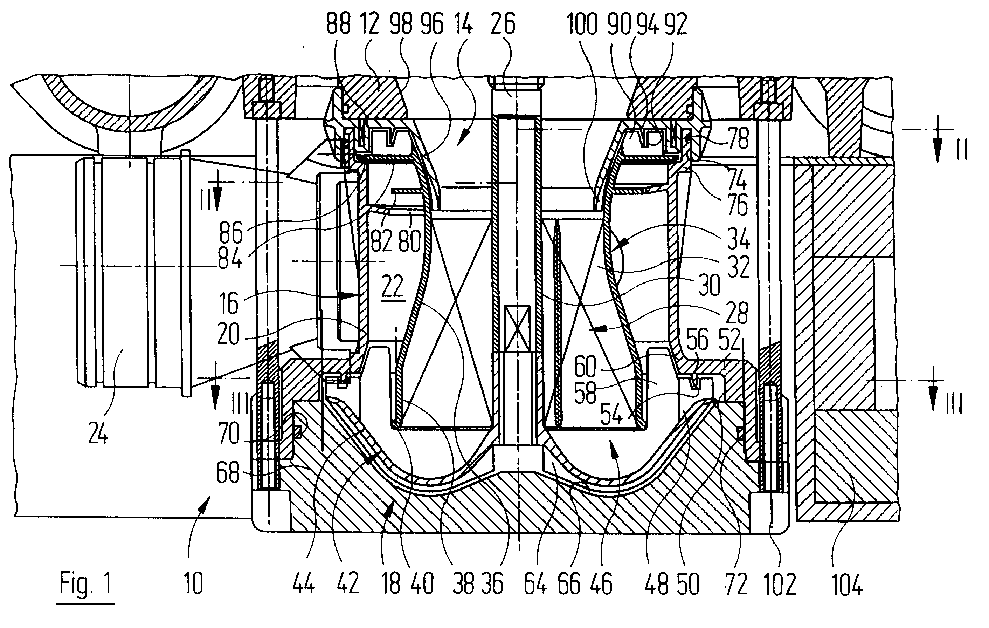

In Figur 1 ist mit 10 insgesamt ein Flüssigkeitsabscheidezyklon bezeichnet, der an das untere Ende eines Gehäuses 12 einer Saugmaschine angeblockt ist.

Der Abscheidezyklon 10 hat ein deckelförmiges oberes Gehäuseteil 14, ein im wesentlichen rotationssymmetrisches mittleres Gehäuseteil 16 sowie ein unteres Gehäuseteil 18.

Das mittlere Gehäuseteil 16 hat eine zylindrische Umfangswand 20, die eine Zyklonkammer 22 begrenzt, in welche tangential ein Einlaßstutzen 24 einmündet. Dieser ist bei einsatzbereiter Maschine mit einer Leitung verbunden, die mit der Ablage eines oder mehrerer dentaler Arbeitsplätze verbunden ist und von dort ein beim Arbeiten im Mund eines Patienten erhaltenes Gemisch aus Luft und flüssigen Anteilen erhält, wobei letztere neben Speichel und Wasser zusätzlich noch Bohrklein (zerspantes Knochenmaterial und Füllungsmaterial) enthalten können.

Durch die Gehäuseteile 14 bis 18 erstreckt sich das untere Ende einer Motorwelle 26 der Saugmaschine, welche in ihrem oberhalb von Figur 1 zu denkenden Teil zusätzlich das Gebläserad der Saugmaschine und den Rotor eines elektrischen Antriebsmotors trägt.

Auf die Motorwelle 26 ist ein insgesamt mit 28 bezeichnetes Ausleitteil aufgesetzt, welches einen Nabenabschnitt 30, eine Mehrzahl in Umfangsrichtung verteilter radialer Flügel 32 sowie eine rotationssymmetrische Leitwand 34 aufweist. Die so zusammen mit der Motorwelle 26 umlaufende Leitwand 34 gibt die innere Begrenzung der Zyklonkammer 22 vor. Wie aus der Zeichnung ersichtlich, ist die Leitwand 34 vom Inneren des Ausleitteiles 28 her konvex gekrümmt. Genauer gesagt hat man in axialer Schnittansicht gesehen einen oberen, im wesentlichen kreisbogenförmigen Leitwandabschnitt 36, an den sich nach unten ein demgegenüber kurzer, im wesentlichen zylindrischer Leitwandabschnitt 38 anschließt, der an seinem freien Rand einen kegelig ballig nach außen und unten verlaufenden Leitwandendabschnitt 40 trägt.

Der Leitwandabschnitt 38 greift in ein insgesamt mit 42 bezeichnetes Pumpenlaufrad ein, welches auf das freie untere Ende der Motorwelle 26 aufgesetzt ist.

Das Pumpenlaufrad 42 hat eine untere Stirnplatte 44, die eine im wesentlichen V-förmige, nach oben offene Umfangsrinne vorgibt, wobei die Spitze des V durch einen großzügig bemessenen, im wesentlichen kreisbogenförmigen Basisabschnitt ersetzt ist.

Die Oberseite des Pumpenlaufrades 42 trägt eine Vielzahl in Umfangsrichtung verteilter Pumpflügel 46, zwischen denen sich am Rand noch weitere Austragflügel 48 befinden. Die radial außenliegenden Endabschnitte der Pumpflügel 46 haben die gleiche Geometrie wie die Austragflügel 48.

Die Austragflügel 48 erstrecken sich in einen spiraligen Flüssigkeitsauslaßkanal 50 hinein, der in einem radial nach außen gezogenen Fußabschnitt 52 des mittleren Gehäuseteiles 16 ausgebildet ist.

In der Oberseite der Austragflügel 48 und den entsprechenden Endabschnitten der Pumpflügel 46 sind Kerben 54 vorgesehen, die unter geringem Spiel über einer Rippe 56 laufen, die von der Deckenwand des Auslaßkanales 50 herabhängt. Auf diese Weise ist der Auslaßkanal 50 dynamisch gegen die Zyklonkammer 22 abgedichtet.

Wie aus Figur 1 ersichtlich, haben die Pumpflügel 46 abgewinkelte Form, so daß das untere Ende des Ausleitteiles 28 in das Pumpenlaufrad 42 eingreifen kann. Ein oberer Endabschnitt 58 der Pumpflügel 46 ist über die Deckenwand des Auslaßkanales 50 hochgezogen und ragt in einen sich zylindrisch erweiternden unteren Endabschnitt 60 der Umfangswand 20 des Zyklonraumes hinein, wobei eine abgeschrägte Außenkante der Endabschnitte 58 unter geringem Spiel von der Innenfläche des Endabschnittes 60 der Umfangswand 20 läuft.

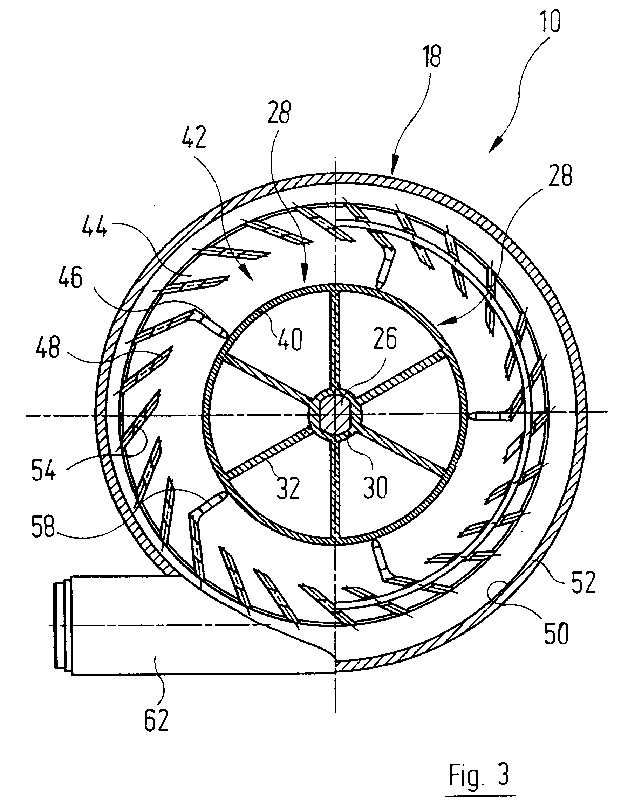

Wie aus Figur 3 ersichtlich, steht ein Flüssigkeitsauslaßstutzen 62 mit dem Auslaßkanal 50 in Verbindung.

Wie Figur 1 zeigt, sind auf der Unterseite der Stirnplatte 44 des Pumpenlaufrades 42 Pumprippen 64 in Umfangsrichtung verteilt vorgesehen, die auf der Unterseite des Pumpenlaufrades 42 einen radial nach außen gerichteten Flüssigkeitsstrom aufrecht erhalten und so das Eindringen von Festkörperpartikeln in den Spalt zwischen der Unterseite des Pumpenlaufrades 42 und der entsprechend konturierten Oberseite 66 des unteren Gehäuseteiles 18 verhindern.

Wie ebenfalls aus Figur 1 ersichtlich, hat das untere Gehäuseteil 18 einen zylindrischen Ansatz 68, mit welchem es in eine entsprechende zylindrische Ausnehmung 70 am unteren Ende des mittleren Gehäuseteiles 16 formschlüssig eingreift, wobei zusätzlich eine O-Ring-Dichtung 72 vorgesehen ist.

Das obere Gehäuseteil 14 hat in seiner Unterseite eine zylindrische Ausnehmung 74, in welcher ein oberer zylindrischer Endabschnitt 76 des mittleren Gehäuseteiles 16 durch O-Ring-Dichtungen 78 abgedichtet Aufnahme findet.

Im oberen Abschnitt trägt die Umfangswand 20 einen schraubenförmigen radial nach innen kragenden und in radialer Einwärtsrichtung abfallenden feststehenden Prallflansch 80. Unter kleinem radialem Abstand von letzterem trägt das Ausleitteil 28 einen umlaufenden Prallflansch 82, der mit dem höchsten Abschnitt des wendelförmigen Prallflansches 80 axial fluchtet.

Oberhalb des Prallflansches 82 trägt das Ausleitteil 28 in unmittelbarer Nachbarschaft seines Endes einen umlaufenden Dichtflansch 84, der unter geringem Spiel in eine Nut 86 eingreift, die zwischen einer im Endabschnitt 76 des Gehäuseteiles 16 ausgebildeten Schulter und einer vom oberen Gehäuseteil 14 getragenen umlaufenden Dichtrippe 88 begrenzt ist.

Auf der Oberseite des Dichtflansches 84 sind radial innerhalb der Dichtrippe 88 liegend Pumpflügel 90 vorgesehen, deren Oberkante wieder jeweils mit einer Kerbe 92 versehen ist. Die Kerben 92 laufen unter kleinem Spiel über eine Dichtrippe 94, die von der Endwand des deckelförmigen Gehäuseteiles 18 nach unten hängend getragen ist. Die vorstehend beschriebenen Bauelemente 84 bis 94 sorgen für eine dynamische Abdichtung des oberen Endes des Ausleitteiles 28 gegen das mittlere Gehäuseteil 16 und damit die Zyklonkammer 22. Die Prallflansche 80 und 82 bilden einen dieser dynamischen Dichtung vorgeschalteten Spritzwasser-Prallschutz.

Wie Figur 1 zeigt, hat das obere Gehäuseteil 14 einen nach unten hängenden Auslaßstutzen 96 für von Flüssigkeit befreite Luft. Die Neigung des Auslaßstutzens 96 ist im Hinblick auf die Neigung der Wandfläche einer Einlaßöffnung 98 gewählt, die im unteren Abschnitt des Gehäuses 12 der Saugmaschine ausgebildet ist. Der obere Endabschnitt des Ausleitteiles 28 folgt im wesentlichen der so vorgegebenen Geometrie der Außenfläche des Auslaßstutzens 96, wobei jedoch zum freien Ende des Auslaßstutzens 96 hin ein sich erweiternder, jedoch schmaler keilförmiger Spalt zwischen der Außenfläche des Auslaßstutzens 96 und der Innenfläche des Ausleitteiles 28 vorliegt. In diesem Spalt sind auf der Außenseite des Auslaßstutzens 96 axiale Rippen 100 vorgesehen, deren außenliegende Kanten unter geringem Abstand der Innenfläche des Ausleitteiles 28 folgen.

Die Gehäuseteile 14, 16, 18, das Ausleitteil 28 und das Pumpenlaufrad 42 sind sämtlich Spritzteile aus faserverstärktem Kunststoffmaterial, und die verschiedenen Gehäuseteile sind durch Bolzen 102 mit dem Gehäuse 12 der Saugmaschine verspannt.

In Figur 1 ist bei 104 zusätzlich ein Schalldämpfer 104 angedeutet, der den Flüssigkeitsabscheidezyklon 10 umgibt.

## Patentansprüche

1. Flüssigkeits-Abscheideeinheit für dentale Zwecke, welche ein Gehäuse (14 bis 18), das eine Zyklonkammer (22) und eine unter der Zyklonkammer (22) liegende Pumpenkammer vorgibt, und mit einem Pumpenlaufrad (42), welches von einer durch die Zyklonkammer (22) gezogenen Antriebswelle (26) getragen ist, wobei das Gehäuse (14 bis 18) einen Einlaßstutzen (24) sowie einen ersten Auslaßstutzen (96) für Luft und einen zweiten Auslaßstutzen (62) für Flüssigkeit aufweist, wobei in der Zyklonkammer (22) ein Ausleitteil (28) für Luft angeordnet ist, welches die Antriebswelle (26) koaxial umgibt und auf dieser sitzt und eine direkte Strömungsverbindung zwischen dem Einlaßstutzen (24) und dem ersten Auslaßstutzen (96) versperrt, bei welcher das Ausleitteil (28) zumindest in einem Abschnitt (36) desselben vom Pumpenlaufrad (42) in Richtung zum ersten Auslaßstutzen (96) abnehmenden Querschnitt hat, wobei die Stelle geringsten Querschnittes des Ausleitteiles (28) in der Nachbarschaft des ersten Auslaßstutzens (96) liegt, dadurch gekennzeichnet, daß der sich verjüngende Abschnitt (36) des Ausleitteiles (28) in axialer Schnittansicht gesehen eine im wesentlichen kreisbogenförmige Geometrie hat.

2. Abscheideeinheit nach Anspruch 1, dadurch gekennzeichnet, daß das Ausleitteil (28) über radiale Flügel (32) mit einem Nabenabschnitt (30) verbunden ist, welcher auf der Antriebswelle (26) sitzt.

3. Abscheideeinheit nach Anspruch 1 oder 2, dadurch gekennzeichnet, daß das untere Ende des Ausleitteiles (28) in axialer Richtung in die Oberseite von Pumpflügeln (46) eingreift, die auf der Oberseite des Pumpenlaufrades (42) vorgesehen sind.

4. Abscheideeinheit nach Anspruch 3, dadurch gekennzeichnet, daß die Pumpflügel (46) axial hochgezogene Endabschnitte (58) aufweisen, welche in den untersten Abschnitt der Zyklonkammer (22) reichen.

5. Abscheideeinheit nach einem der Ansprüche 1 bis 4, dadurch gekennzeichnet, daß eine untere Stirnplatte (44) des Pumpenlaufrades (42) eine nach oben offene kontinuierlich gekrümmte Umlenkrinne bildet.

6. Abscheideeinheit nach einem der Ansprüche 1 bis 5, dadurch gekennzeichnet, daß radial außenliegende Endabschnitte von Pumpflügeln (46) und ggf. zusätzlichen Austragflügeln (48) des Pumpenlaufrades (42) in ihrer oberen Kante jeweils eine Kerbe (54) aufweisen, die unter geringem Spiel über einer von einer Deckenwand der Pumpenkammer herabhängenden Rippe (56) laufen.

7. Abscheideeinheit nach einem der Ansprüche 1 bis 6, dadurch gekennzeichnet, daß die Außenseite des Ausleitteiles (28) einen über dem Einlaßstutzen (24) des Gehäuses (14 bis 18) liegenden Prallflansch (82) trägt.

8. Abscheideeinheit nach Anspruch 7, dadurch gekennzeichnet, daß der Rand des mit dem Ausleitteil (28) umlaufenden Prallflansches (82) unter geringem radialem Spiel innerhalb eines gehäusefesten Prallflansches (80) läuft.

9. Abscheideeinheit nach Anspruch 8, dadurch gekennzeichnet, daß der gehäusefeste Prallflansch (80) wendelförmig ist, wobei er vorzugsweise in radialer Einwärtsrichtung abfällt.

10. Abscheideeinheit nach einem der Ansprüche 1 bis 9, dadurch gekennzeichnet, daß beim oberen Ende des Ausleitteiles (28) ein transversaler Dichtflansch (84) vorgesehen ist, der in eine Nut (86) des Gehäuses (14 bis 18) unter kleinem Spiel eingreift.

11. Abscheideeinheit nach Anspruch 10, dadurch gekennzeichnet, daß die Oberseite des Dichtflansches (84) eine Vielzahl in Umfangsrichtung verteilter Pumpflügel (90) trägt.

12. Abscheideeinheit nach Anspruch 11, dadurch gekennzeichnet, daß die Oberkanten der Pumpflügel (90) des Dichtflansches (84) Kerben (92) aufweisen, die unter geringem Spiel unter einer ringförmigen Dichtrippe (94) hindurchlaufen, die von einer Deckenwand des Gehäuses (14 bis 18) getragen ist.

13. Abscheideeinheit nach einem der Ansprüche 1 bis 12, dadurch gekennzeichnet, daß der erste Auslaßstutzen (96) von einer Deckenwand des Gehäuses (14 bis 18) axial nach unten gezogen ist, wobei er im wesentlichen der Form der Innenfläche einer Einlaßöffnung (98) der Saugmaschine folgt, und daß das obere Ende des Ausleitteiles (28) der so vorgegebenen Außenkontur des Auslaßstutzens (96) unter geringem Abstand folgt.

14. Abscheideeinheit nach Anspruch 13, dadurch gekennzeichnet, daß die Außenseite eines Endabschnittes des Auslaßstutzens (96) zusammen mit der Innenfläche des Ausleitteiles (28) einen spitzen, im Querschnitt keilförmigen Spalt begrenzt und die Außenseite des Auslaßstutzens (96) in diesem Spalt eine Vielzahl in Umfangsrichtung verteilter axialer Rippen (100) trägt, deren Außenkanten unter kleinem Spiel der Innenfläche des Ausleitteiles (28) gegenüberliegen.

15. Abscheideeinheit nach einem der Ansprüche 1 bis 14, dadurch gekennzeichnet, daß die Unterseite des Pumpenlaufrades (42) mit radiale Erstreckung aufweisenden Pumprippen (64) versehen ist.

16. Abscheideeinheit nach einem der Ansprüche 1 bis 15, dadurch gekennzeichnet, daß die Antriebswelle (26) die Motorwelle einer angeblockten Saugmaschine ist und die Antriebswelle zugleich das Gebläserad der Saugmaschine trägt.

## Claims

1. Liquid separating unit for dental purposes, which assumes a housing (14 to 18), the one cyclone chamber (22) and a pump chamber lying below the cyclone chamber (22), and with a pump impeller (42) which is supported by a drive shaft (26) drawn through the cyclone chamber (22), in which the housing (14 to 18) comprises an inlet nozzle (24) together with a first outlet nozzle (96) for air and a second outlet nozzle (62) for liquid, wherein in the cyclone chamber (22) there is disposed a discharge section (28) for air which surrounds coaxially the drive shaft (26) and sits on the latter and blocks a direct flow connection between the inlet nozzle (24) and the first outlet nozzle (96), in which the discharge section (28) has in at least one section (36) of the latter a cross-section decreasing from the pump impeller (42) in the direction of the first outlet nozzle (96), wherein the point of smallest cross-section of the discharge section (28) lies in the vicinity of the first outlet nozzle (96), characterised in that the tapering section (36) of the discharge section (28) has when viewed in axial sectional view a substantially circular geometry.

2. Separating unit according to claim 1, characterised in that the discharge section (28) is connected via radial blades (32) to a notch section (30) which sits on the drive shaft (26).

3. Separating unit according to claim 1 or 2, characterised in that the lower end of the discharge section (28) engages in axial direction with the top side of the pump blades (46) which are provided on the top side of the pipe impeller (42).

4. Separating unit according to claim 3, characterised in that the pump blades (46) have axially raised end sections (58) which extend into the bottommost section of the cyclone chamber (22).

5. Separating unit according to one of claims 1 to 4, characterised in that a bottom front plate (44) of the pump impeller (42) forms an upwardly open continuously curved deflection groove.

6. Separating unit according to one of claims 1 to 5, characterised in that radially external end sections of pump blades (46) and optionally additional discharge blades (48) of the pump impeller (42) each comprise in their upper edge a notch (54) which runs with a slight clearance above a fin (56) suspended from an upper wall of the pump chamber.

7. Separating unit according to one of claims 1 to 6, characterised in that the outside of the discharge section (28) supports an impact flange (82) lying above the inlet nozzle (24) of the housing (14 to 18).

8. Separating unit according to claim 7, characterised in that the edge of the impact flange (82) rotating with the discharge section (28) runs with a slight radial clearance within an impact flange (80) fixed to the housing.

9. Separating unit according to claim 8, characterised in that the impact flange (80) fixed to the housing is helical-shaped, wherein it preferably drops in a radial inward direction.

10. Separating unit according to one of claims 1 to 9, characterised in that at the upper end of the discharge section (28) a transversal gasket (84) is provided, which engages with a slight clearance with a groove (86) in the housing (14 to 18).

11. Separating unit according to claim 10, characterised in that the top side of the sealing flange (84) supports a large number of pump blades (90) distributed in peripheral direction.

12. Separating unit according to claim 11, characterised in that the upper edges of the pump blades (90) of the gasket (84) comprise notches (92) which run with a slight clearance below an annular sealing fin (94) which is supported by an upper wall of the housing (14 to 18).

13. Separating unit according to one of claims 1 to 12, characterised in that the first outlet nozzle (96) is drawn axially downwards from an upper wall of the housing (14 to 18), wherein it follows substantially the form of the inner surface of an inlet opening (98) in the suction machine, and that the upper end of the discharge section (28) follows a slight distance apart the thus determined outer contour of the outlet nozzle (96).

14. Separating unit according to claim 13, characterised in that the outside of an end section of the outlet nozzle (96) bounds together with the inner surface of the discharge section (28) a pointed gap wedge-shaped in cross-section and the outside of the outlet nozzle (96) supports in said gap a large number of axial fins (100) distributed in peripheral direction, the outer edges of which lie opposite with a slight clearance the inner surface of the discharge section (28).

15. Separating unit according to one of claims 1 to 14, characterised in that the underside of the pump impeller (42) is provided with pump fins (64) exhibiting radial extension.

16. Separating unit according to one of claims 1 to 15, characterised in that the drive shaft (26) is the motor spindle of a joined suction machine and the drive shaft supports at the same time the impeller of the suction machine.

## Revendications

1. Séparateur de liquide à des fins dentaires, avec un carter (14 à 18), qui définit une chambre de cyclone (22) et une chambre de pompe située en dessous de la chambre de cyclone (22), et avec un rotor de pompe (42), qui est porté par un arbre d'entraînement (26) traversant la chambre de cyclone (22), le carter (14 à 18) présentant une tubulure d'admission (24) ainsi qu'une première tubulure d'évacuation (96) pour l'air et une seconde tubulure d'évacuation (62) pour le liquide, un élément déflecteur (28) pour l'air étant disposé dans la chambre de cyclone (22), élément qui entoure coaxialement l'arbre d'entraînement (26), est monté sur ce dernier et empêche une liaison fluidique directe entre la tubulure d'admission (24) et la première tubulure d'évacuation (96), l'élément déflecteur (28) possédant, au moins dans une partie (36) de cet élément, une section qui diminue depuis le rotor de pompe (42) en direction de la première tubulure d'évacuation (96), l'endroit de plus petite section de l'élément déflecteur (28) se trouvant au voisinage de la première tubulure d'évacuation (96), **caractérisé** en ce que la partie allant en se rétrécissant (36) de l'élément déflecteur (28) possède, vue en coupe axiale, une géométrie essentiellement en forme d'arc de cercle.

2. Séparateur selon la revendication 1, **caractérisé** en ce que l'élément déflecteur (28) est relié par l'intermédiaire d'ailettes radiales (32) à une partie de moyeu (30) qui est montée sur l'arbre d'entraînement (26).

3. Séparateur selon la revendication 1 ou 2, **caractérisé** en ce que l'extrémité inférieure de l'élément déflecteur (28) s'engage en direction axiale dans la face supérieure d'ailettes de pompe (46) qui sont prévues sur la face supérieure du rotor de pompe (42).

4. Séparateur selon la revendication 3, **caractérisé** en ce que les ailettes de pompe (46) présentent des parties terminales (58) axialement relevées, qui s'étendent dans la partie la plus basse de la chambre de cyclone (22).

5. Séparateur selon une des revendications 1 à 4, **caractérisé** en ce qu'une plaque frontale inférieure (44) du rotor de pompe (42) forme une goulotte de déviation à courbure continue, ouverte vers le haut.

6. Séparateur selon une des revendications 1 à 5, **caractérisé** en ce que des parties terminales radialement extérieures des ailettes de pompe (46) et d'éventuelles ailettes d'expulsion supplémentaires (48) du rotor de pompe (42) présentent, dans leur arête supérieure, des encoches respectives (54) qui circulent avec un faible jeu au-dessus d'une nervure (56) descendant d'une paroi supérieure de la chambre de pompe.

7. Séparateur selon une des revendications 1 à 6, **caractérisé** en ce que le côté extérieur de l'élément déflecteur (28) porte une bride formant chicane (82) située au-dessus de la tubulure d'admission (24) du carter (14 à 18).

8. Séparateur selon la revendication 7, **caractérisé** en ce que le bord de la bride formant chicane (82) rotative avec l'élément déflecteur (28) circule avec un faible jeu radial à l'intérieur d'une bride formant chicane (80) solidaire du carter.

9. Séparateur selon la revendication 8, **caractérisé** en ce que la bride formant chicane (80) solidaire du carter a une forme d'hélice, avec une pente descendante dirigée de préférence radialement vers l'intérieur.

10. Séparateur selon une des revendications 1 à 9, **caractérisé** en ce qu'une bride d'étanchéité transversale (84) est prévue à l'extrémité supérieure de l'élément déflecteur (28), bride qui s'engage avec un faible jeu dans une rainure (86) du carter (14 à 18).

11. Séparateur selon la revendication 10, **caractérisé** en ce que le côté supérieur de la bride d'étanchéité (84) porte une pluralité d'ailettes de pompe (90) réparties en direction circonférentielle.

12. Séparateur selon la revendication 11, **caractérisé** en ce que les arêtes supérieures des ailettes de pompe (90) de la bride d'étanchéité (84) présentent des encoches (92) qui circulent avec un faible jeu en dessous d'une nervure d'étanchéité annulaire (94) qui est portée par une paroi supérieure du carter (14 à 18).

13. Séparateur selon une des revendications 1 à 12, **caractérisé** en ce que la première tubulure d'évacuation (96) s'étend axialement vers le bas à partir d'une paroi supérieure du carter (14 à 18), en suivant pour l'essentiel la forme de la face intérieure d'une ouverture d'admission (98) du dispositif d'aspiration, et en ce que l'extrémité supérieure de l'élément déflecteur (28) suit à faible distance le contour extérieur ainsi défini de la tubulure d'évacuation (96).

14. Séparateur selon la revendication 13, **caractérisé** en ce que le côté extérieur d'une partie terminale de la tubulure d'évacuation (96) délimite, conjointement avec la face intérieure de l'élément déflecteur (28), une fente en pointe de section cunéiforme, et le côté extérieur de la tubulure d'évacuation (96) porte, dans cette fente, une pluralité de nervures axiales (100) réparties en direction circonférentielle, dont les arêtes extérieures se trouvent en vis-à-vis, sous un faible jeu, de la face intérieure de l'élément déflecteur (28).

15. Séparateur selon une des revendications 1 à 14, **caractérisé** en ce que le côté inférieur du rotor de pompe (42) est pourvu de nervures de pompe (64) s'étendant radialement.

16. Séparateur selon une des revendications 1 à 15, **caractérisé** en ce que l'arbre d'entraînement (26) est l'arbre de moteur d'un dispositif d'aspiration fixé par bride, et l'arbre d'entraînement porte en même temps la roue de soufflante du dispositif d'aspiration.
